# EUROPEAN PATENT APPLICATION

(11) **EP 4 459 246 A1**
(43) Date of publication of application: **06.11.2024**
(21) Application number: 24173092.8
(22) Date of filing: 29.04.2024
(51) Int. Cl.: G01G 19/393

(54) **WEIGHING DEVICE FOR A MULTI-HEAD WEIGHING MACHINE, WEIGHING HEAD AND MULTI-HEAD WEIGHING MACHINE**

(30) Priority: 02.05.2023 IT 202300008556
(71) Applicant: MBP S.r.l., 46043 Castiglione delle Stiviere (Mantova) (IT)
(72) Inventor: FIORAVANTI, Andrea, 46043 Castiglione delle Stiviere (Mantova) (IT); PAVAN, Marco, 46043 Castiglione delle Stiviere (Mantova) (IT)
(74) Representative: Sandri, Sandro

(57) **Abstract**

A weighing device (10) for a multi-head weighing machine and comprising a load cell (11), configured to generate a first signal (S1) representative of the weight force exerted by a bucket (C), and at least one accelerometer (12), configured to generate a second signal (S2) representative of the vibrations induced on the bucket (C) at least during a use configuration of the multi-head weighing machine. Furthermore, the weighing device (10) comprises a control unit (13) configured to compare and process the first signal (S1) and the second signal (S2) and to generate a rectified signal (P) representative of the weight of at least one product contained in the bucket (C).

## Description

The present invention relates to a weighing device for a multi-head weighing machine, a weighing head and a multi-head weighing machine. Therefore, the present invention finds a vast field of application in the sector of packaging machines for products of various kinds, and mainly of the food type.

In the sector of weighing and dosing of food products or the like, automatic machines are generally used, commonly referred to as multi-head weighing machines, which are configured to weigh the product fed thereto and then convey the predetermined dose to a packaging machine.

Multi-head weighing machines comprise a plurality of weighing heads circumferentially arranged around a central body and a plurality of respective radial ducts, generally vibrators, which move the product towards the weighing heads.

The weighing heads generally comprise a pre-dosing bucket, adapted to receive product from the above-mentioned vibrators, and a weighing bucket, arranged below the pre-dosing bucket along a vertical direction and configured to receive at least a part of the product released by falling from the pre-dosing bucket.

Some weighing heads can comprise a memory bucket downstream of the weighing bucket which allows to increase the weighing accuracy.

The weighing heads further comprise a load cell connected to the weighing bucket and configured to weigh the quantity of product arranged inside the weighing bucket.

Disadvantageously, the strong vibrational loads to which the weighing bucket is subjected due to the movement of the product and the moving parts of the machine result in a reduction in the accuracy and precision of the weight measurement carried out by the load cell.

In order to solve this issue, some weighing heads comprise a low-pass filter that allows the signal generated by the load cell to be filtered from the vibrations that exceed a predetermined frequency (for example, around 21 Hz), allowing a more reliable weight estimate to be obtained.

Disadvantageously, some components of the multi-head weighing machine, for example the frame and/or the support platforms, tend to vibrate at lower frequencies, for example of the order of 2 Hz or 3 Hz, whose filtering by applying low-pass filters is particularly inefficient as it induces a drastic increase in the timings required for weighing.

The creation of more robust frames and/or platforms can allow a reduction of the disturbance induced at the aforementioned frequencies. However, this solution, in addition to not eliminating the problem, causes such an increase in production costs that the price of the machine is very often off-market.

There are also systems that address the problem of the vibrations by using a known vibrating mass fixed to the frame of the multi-head weighing machine and connected to a further load cell. In essence, the multi-head weighing machine comprises a control unit that receives the measurements made by the load cell of each weighing head and compares them with the measurements made by the load cell connected to the vibrating mass so as to obtain a more reliable weight estimate.

Disadvantageously, the accuracy of this estimate is strongly dependent on the relative positioning between the vibrating mass and the load cells of the different weighing heads.

In particular, the control unit also performs the function of reconstructing the vibrational loads on each bucket on the basis of the measurements obtained from the load cell connected to the vibrating mass.

Disadvantageously, such a reconstruction may require a complex modal analysis, therefore, a particularly burdensome computational load on the control unit that involves an equally burdensome energy expenditure and computation timings that slow down weighing.

In particular, such systems require software dedicated to the specific machine since the reconstruction of the vibrations to which the different load cells are subjected requires an accurate discretization of all the elements that make up the multi-head weighing machine.

Therefore, the aforementioned systems also require long and expensive development and calibration operations in order to obtain reliable results.

Although systems with a greater number of vibrating masses can be made in order to increase the accuracy of the analysis, these estimates are always the result of a reconstruction carried out by the control unit and, therefore, susceptible to a plurality of uncertainties induced, for example, by improper discretization of the multi-head weighing machine.

In addition, the use of a greater number of vibrating masses results in a strong increase in production and maintenance costs that strongly affects the efficiency of the weighing operations.

In this context, the technical task underlying the present invention is to propose a weighing device for a multi-head weighing machine, a weighing head and a multi-head weighing machine that overcome the aforementioned drawbacks of the prior art.

In particular, it is an object of the present invention to provide a weighing device for a multi-head weighing machine, a weighing head and a multi-head weighing machine capable of increasing the accuracy of the estimate of the weight of the product placed inside the bucket.

A further object of the present invention is to provide a weighing device for a multi-head weighing machine, a weighing head and a multi-head weighing machine that are more efficient than the devices of the prior art. A further object of the present invention is to provide a weighing device for a multi-head weighing machine, a weighing head and a multi-head weighing machine capable of overcoming the need for long and expensive calibration operations compared to the devices of the prior art.

The technical task set and the objects specified are substantially achieved by a weighing device for a multi-head weighing machine, a weighing head and a multi-head weighing machine comprising the technical features as set out in one or more of the accompanying claims

The dependent claims correspond to possible embodiments of the invention.

Further features and advantages of the present invention will become more apparent from the indicative and thus non-limiting description of a preferred but non-exclusive embodiment of a weighing device for a multi-head weighing machine, a weighing head and a multi-head weighing machine, as illustrated in the appended drawings, in which:

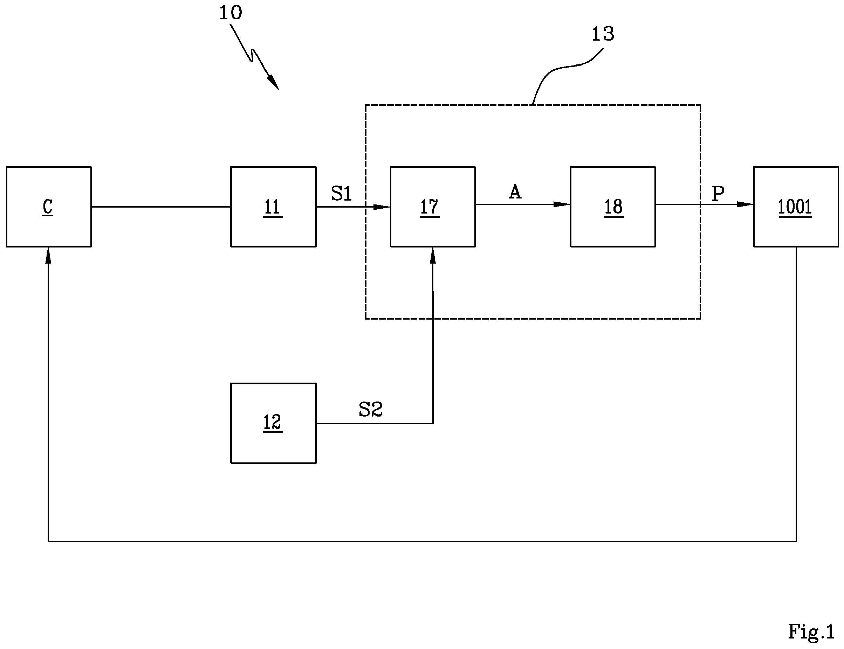

- figure 1 is a schematic representation of a weighing device for a multi-head weighing machine in accordance with a possible embodiment of the present invention;
- figure 2 is a partial perspective view of the weighing device for a multi-head weighing machine of figure 1;

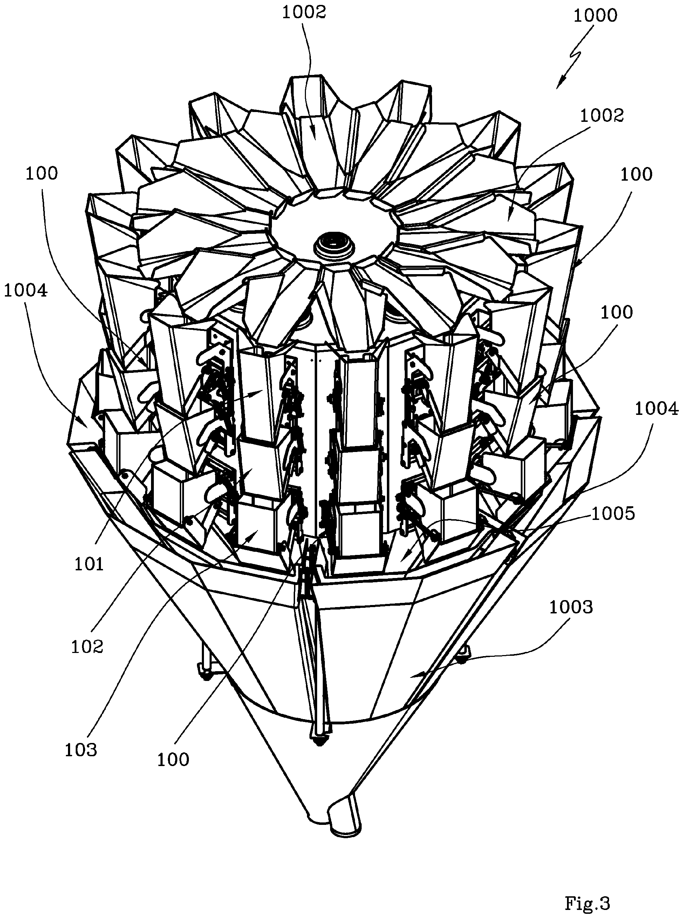

- figure 3 is a perspective representation of a multi-head weighing machine in accordance with a possible embodiment of the present invention.

With reference to the attached figures, a weighing device for a multi-head weighing machine has been indicated overall with reference numeral 10, which will be reported below as weighing device 10.

The weighing device 10 comprises a load cell 11 connected or connectable to a bucket "C" of a multi-head weighing machine to generate a first signal "S1" representative of the weight force exerted by the bucket at least during a use configuration of the multi-head weighing machine.

Advantageously, the weighing device 10 comprises at least one accelerometer 12 configured to generate a second signal "S2" representative of the vibrations induced on the bucket "C" at least during a use configuration of the multi-head weighing machine. In particular, the at least one accelerometer 12 guarantees the weighing device 10 a particularly accurate and reliable second signal "S2" capable of representing at least the loads of a vibrational nature to which the bucket "C" is subjected due to the movement of the product and the moving parts of the machine.

Furthermore, the use of the accelerometer 12 makes it possible to overcome the long calibration operations that affect the vibrating mass systems belonging to the prior art.

Preferably, the at least one accelerometer 12 may be a triaxial accelerometer, thus ensuring a further increase in the accuracy of the second signal "S2".

Advantageously, the at least one accelerometer 12 can be a MEMS (Micro-Electro-Mechanical Systems) type accelerometer which therefore has particularly small dimensions, marked lightness and a significantly lower cost than the systems commonly used in the prior art. In particular, the marked lightness and the limited dimensions make it possible to reduce the operational space requirements on the multi-head weighing machine and the moving masses limiting the onset of further vibrational loads.

The weighing device 10 also comprises a control unit 13 configured to compare and process the first signal "S1" and the second signal "S2". In particular, the control unit 13 is configured to generate a rectified signal "P" representative of the weight of at least one product contained in the bucket "C".

In other words, the control unit 13 compares the first signal "S1" and the second signal "S2" to identify the components of the first signal "S1" due to the vibrations induced on the bucket "C" by the operation of the machine and/or by other components that are endogenous and/or exogenous to the multi-head weighing machine to process the rectified signal "P".

In this way, the present invention allows to obtain a particularly reliable and accurate measurement of the weight of the product inside the bucket "C" overcoming the high computational times due to the use of low-pass filters used by the prior art.

Preferably, the weighing device 10 is connected or connectable to a command unit of the multi-head weighing machine that can command the opening and/or the closing of the buckets at least in part as a function of at least one rectified signal "P", even more preferably as a function of a plurality of rectified signals "P", coming from the weighing device 10, even more preferably coming from a plurality of weighing devices 10.

In this way, the weighing device 10 can provide the command unit with a particularly accurate rectified signal "P" guaranteeing a simplification and/or a reduction of the computational load imparted to it.

Advantageously, the at least one accelerometer 12 can be arranged proximal to the load cell 11, in this way the accelerations acquired by the accelerometer 12 are substantially representative also of the vibrations induced on the load cell 11 allowing the control unit 13 to generate a particularly accurate rectified signal "P".

In other words, the accelerometer 12 can be arranged in such a way as to provide a particularly accurate estimate of the vibrational loads induced on the load cell 11 by substantially providing a direct measurement of the vibrations near the load cell 11.

In this way, the present invention reduces the computational load of the command unit by overcoming the need for complex analyses, generally of a modal type, used by the vibrating mass systems used in the prior art.

Furthermore, the present invention allows to overcome the long and laborious calibration operations that must be carried out on the vibrating mass systems used by the prior art, reducing the assembly and commissioning costs.

Preferably, the load cell 11 and/or the at least one accelerometer 12 are connected or connectable to the frame of the multi-head weighing machine.

For example, the at least one accelerometer 12 may be configured to perform at least one measurement of the accelerations to which the frame is subjected during at least one use configuration of the multi-head weighing machine. In particular, the accelerometer 12 can be configured to generate the second signal "S2" at least partially as a function of the aforementioned at least one measurement.

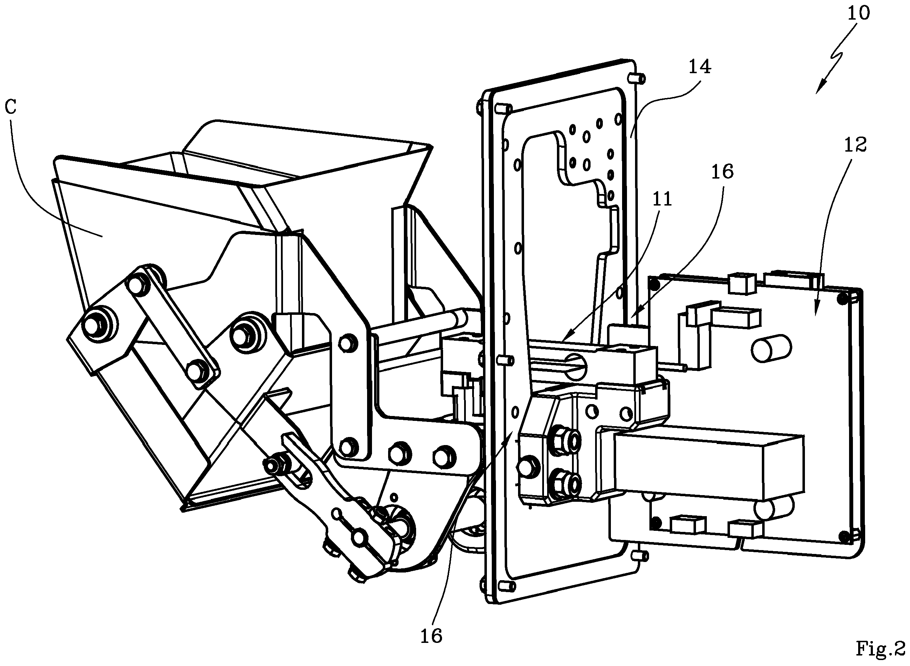

In accordance with a possible embodiment and as illustrated in figure 2, the weighing device 10 may comprise a support body 14, for example plate-shaped, connected or connectable to the frame of the multi-head weighing machine.

In particular, the at least one accelerometer 12 and/or the load cell 11 may be mounted on the support body 14.

In accordance with a possible purely exemplary and non-limiting embodiment, the at least one accelerometer 12 can be at least partially facing the load cell 11.

For example, the support body 14 can have a first connection portion 15 and a second connection portion 16 adapted to allow mounting the load cell 11 and the at least one accelerometer 12 on the support body 14, respectively.

Advantageously, the first connection portion 15 and the second connection portion 16 can be arranged in close positions to ensure a high accuracy of the rectified signal "P".

Purely by way of non-limiting example, the first connection portion 15 and the second connection portion 16 may have a distance of less than 30 cm, preferably less than 10 cm.

In accordance with a further particularly advantageous aspect, the weighing device 10 may comprise a plurality of accelerometers 12 adapted to generate a respective plurality of second signals "S2". In particular, the control unit 13 can be configured to compare and process the first signal "S1" and the aforementioned plurality of second signals "S2" in order to increase the precision and/or the accuracy of the rectified signal "P".

Advantageously, the control unit 13 may comprise a comparison module 17 configured to make a comparison between the first signal "S1" and the second signal "S2" and generate a comparison signal "A" representative of the comparison between the first signal "S1" and the second signal "S2".

Furthermore, the control unit 13 may comprise a computation module 18 configured to process the comparison signal "A" and generate the rectified signal "P". In particular, the comparison module 17 can be arranged upstream of the computation module 18, in this way the comparison module 17 can provide a comparison signal "A" substantially clear of the vibrational components represented by the second signal "S2", thus allowing to simplify the computational load of the computation module 18 speeding up the generation of the rectified signal "P".

In accordance with a further aspect the present invention refers to a weighing head 100 for a multi-head weighing machine comprising at least one pre-dosing bucket 101, adapted to receive at least one product from feeding means for feeding at least one product of a multi-head weighing machine, and at least one weighing bucket 102, arranged below the pre-dosing bucket along a vertical direction and configured to receive at least a part of the at least one product from the pre-dosing bucket 101.

Advantageously, the weighing head 100 may comprise at least one weighing device 10 in accordance with what is described above. In particular, the weighing device 10 can be connected or connectable at least to the weighing bucket 102 to generate the aforementioned rectified signal "P" representative of the weight of at least one product contained in the weighing bucket 102.

Purely by way of non-limiting example, the weighing head may further comprise a memory bucket 103 arranged below the weighing bucket 102 along the aforementioned vertical direction and configured to receive at least one part of the at least one product from the weighing bucket 102.

In accordance with some possible embodiments of the present invention, the weighing head 100 may comprise a plurality of weighing devices 10 each of which is connected or connectable to a respective bucket to generate a plurality of rectified signals "P" each of which is representative of the weight of at least one product contained in the bucket to which it is connected.

In accordance with a further inventive aspect the present invention refers to a multi-head weighing machine 1000 comprising a plurality of weighing heads. In particular, at least one of the aforementioned weighing heads of the multi-head weighing machine 1000 may be a weighing head 100 in accordance with what is previously described.

In addition, the multi-head weighing machine 1000 may comprise a command unit 1001 adapted to receive at least one rectified signal "P" and command the opening and/or the closing of the buckets at least in part as a function of the rectified signal "P".

In accordance with a possible purely exemplary and non-limiting embodiment of the present invention, each weighing head 100 of the multi-head weighing machine 1000 may comprise at least one weighing device 10.

Preferably, each weighing device 10 is connected to the aforementioned command unit 1001 and the command unit is configured to command the opening and/or the closing of the buckets at least in part as a function of the plurality of rectified signals "P" coming from the respective weighing devices 10.

The multi-head weighing machine further comprises feeding means 1002 for feeding at least one product adapted to feed at least one product to at least one bucket of the aforementioned plurality of weighing heads 100.

Preferably, the feeding means 1002 comprise one or more vibrators arranged at least partially above the weighing heads 100 to promote the product to enter by dropping inside at least one bucket of at least one weighing head 100.

Furthermore, the multi-head weighing machine may comprise at least one conveyor 1003 adapted to receive the product from at least one weighing head 100 and convey it towards a packaging machine.

Preferably, the multi-head weighing machine 1000 may comprise a first conveyor 1004 and a second conveyor 1005 arranged at least partially below the weighing head 100 to receive at least one product.

In particular, the first conveyor 1004 and the second conveyor 1005 can be at least partially concentric.

It can therefore be observed that the present invention achieves the proposed purposes by realizing a weighing device for a multi-head weighing machine, a weighing head and a multi-head weighing machine having an increased accuracy in the estimate of the weight of the product arranged inside the bucket compared to the devices of the prior art thanks to the presence of an accelerometer configured to generate a signal representative of the vibrations induced on the bucket and of a control unit configured to compare and process a signal coming from a load cell connected to the bucket and the signal of the accelerometer to generate a rectified signal representative of the weight of at least one product contained in the bucket.

## Claims

1. A weighing device (10) for a multi-head weighing machine, said weighing device comprising:
- a load cell (11) connected or connectable to a bucket (C) of a multi-head weighing machine to generate a first signal (S1) representative of the weight force exerted by the bucket (C) at least during a use configuration of the multi-head weighing machine;
- at least one accelerometer (12) configured to generate a second signal (S2) representative of the vibrations induced on the bucket (C) at least during a use configuration of the multi-head weighing machine;
- a control unit (13) configured to compare and process said first signal (S1) and said second signal (S2), said control unit (13) being configured to generate a rectified signal (P) representative of the weight of at least one product contained in the bucket (C).

2. The weighing device according to claim 1, wherein said at least one accelerometer (12) is a MEMS-type accelerometer (12).

3. The weighing device according to claim 1 or 2, wherein said at least one accelerometer (12) is a triaxial accelerometer (12).

4. The weighing device according to one or more of the preceding claims, comprising a plurality of accelerometers.

5. The weighing device according to one or more of the preceding claims, wherein said load cell (11) and/or said at least one accelerometer (12) are connected to the frame of the multi-head weighing machine; and wherein said at least one accelerometer (12) is configured to perform at least one measurement of the accelerations to which the frame of the multi-head weighing machine is subjected at least during a use configuration of the multi-head weighing machine, said accelerometer (12) being configured to generate said second signal (S2) at least partially as a function of said at least one measurement.

6. The weighing device according to one or more of the preceding claims, wherein said at least one accelerometer (12) is at least partially facing said load cell (11).

7. The weighing device according to one or more of the preceding claims, comprising a support body (14) connected or connectable to the multi-head weighing machine, said support body (14) having a first connection portion (15) and a second connection portion (16) adapted to allow mounting said load cell (11) and said at least one accelerometer (12) on said support body (14), respectively.

8. The weighing device according to one or more of the preceding claims, wherein said control unit (13) comprises a comparison module (17) configured to perform a comparison between said first signal (S1) and said second signal (S2) and generate a comparison signal (A) representative of the comparison between said first signal (S1) and said second signal (S2); and wherein said control unit (13) comprises a computation module (18) configured to process said comparison signal (A) and generate said rectified signal (P).

9. A weighing head (100) for a multi-head weighing machine comprising:
- at least one pre-dosing bucket (101) adapted to receive at least one product from feeding means for feeding at least one product of a multi-head weighing machine;
- at least one weighing bucket (102) arranged below said pre-dosing bucket (101) along a vertical direction and configured to receive at least one part of the at least one product from said pre-dosing bucket (101);
- at least one weighing device (10) according to one or more of the preceding claims, said weighing device being connected or connectable to at least said weighing bucket (102) to generate said rectified signal (P) representative of the weight of at least one product contained in said weighing bucket (102).

10. A multi-head weighing machine (1000) comprising:
- a plurality of weighing heads, wherein at least one weighing head is a weighing head (100) according to claim 9;
- feeding means (1002) for feeding at least one product adapted to feed at least one product to at least one bucket of said plurality of weighing heads;
- at least one conveyor (1003) adapted to receive the product from at least one weighing head and convey it towards a packaging machine.
